# EUROPÄISCHE PATENTANMELDUNG

(11) **EP 4 343 193 A1**
(43) Veröffentlichungstag der Anmeldung: **27.03.2024**
(21) Anmeldenummer: 23184773.2
(22) Anmeldetag: 11.07.2023
(51) Int. Cl.: F16L 33/207

(54) **FAHRZEUGFLUIDVERBINDUNGSANORDNUNG**

(30) Priorität: 23.09.2022 DE 102022124565
(71) Anmelder: VERITAS AG, 63571 Gelnhausen (DE)
(72) Erfinder: ZAHN, Roland, 36396 Steinau (DE); HEINZMANN, Hartmut, 63571 Gelnhausen (DE)
(74) Vertreter: Patentship Patentanwaltsgesellschaft mbH

(57) **Zusammenfassung**

Die vorliegende Anmeldung betrifft eine Fahrzeugfluidverbindungsanordnung (100) zum fluidtechnischen Verbinden von fluidführenden Bauteilen in einem Fahrzeug, umfassend einen Fahrzeugfluidstutzen (101) zum Leiten eines Fluids in einem Fahrzeug, wobei der Fahrzeugfluidstutzen (101) ausschließlich aus einem Thermoplast geformt ist, und einen Stutzenabschnitt (105) mit einem Tannenbaumprofil (107) aufweist, einen Fluidschlauch (103) zum Leiten des Fluids in einem Fahrzeug, wobei der Fluidschlauch (103) aus einem Elastomer geformt ist, und einen Verbindungsabschnitt (137) aufweist, welcher auf den Stutzenabschnitt (105) des Fahrzeugfluidstutzens (101) aufgeschoben ist, und eine Befestigungshülse (135), welche aus einem Metall geformt ist, und welche auf den Verbindungsabschnitt (137) des Fluidschlauchs (103) aufgeschoben und verpresst ist, wobei die auf den Verbindungsabschnitt (137) des Fluidschlauchs (103) aufgeschobene und verpresste Befestigungshülse (135) ausgebildet ist, den Verbindungsabschnitt (137) des Fluidschlauchs (103) kraftschlüssig an den Stutzenabschnitt (105) des Fahrzeugfluidstutzens (101) zu pressen, um eine druckstabile fluidtechnische Verbindung zwischen dem Fluidschlauch (103) und dem Fahrzeugfluidstutzen (101) zum Leiten des Fluids zu erreichen.

## Beschreibung

Die vorliegende Anmeldung betrifft eine Fahrzeugfluidverbindungsanordnung und ein Verfahren zum Herstellen einer Fahrzeugfluidverbindungsanordnung. Die vorliegende Anmeldung betrifft insbesondere eine Fahrzeugfluidverbindungsanordnung umfassend einen Fahrzeugfluidstutzen, einen Fluidschlauch, und eine Befestigungshülse.

Fahrzeugfluidverbindungsanordnungen, d.h. entsprechende in einem Fahrzeug angeordnete Verbindungsanordnungen zum fluidtechnischen Verbinden von fluidführenden Bauteilen, nehmen im Fahrzeugbau eine entscheidende Bedeutung ein, da in einem Fahrzeug eine Vielzahl von unterschiedlichsten Fluiden, wie z.B. Kraftstoff, Getriebeöl, Luft, Kühlflüssigkeit, etc., zwischen unterschiedlichsten Bauteilen geleitet werden. Je nach Anwendungsgebiet, bzw. je nach Art des geführten Fluids werden hierbei hohe Anforderungen an entsprechende herkömmliche Fahrzeugfluidverbindungsanordnungen in Bezug auf Temperaturbeständigkeit, Druckbeständigkeit und Medienbeständigkeit unter Berücksichtigung der notwendigen Dichtigkeitsanforderungen gestellt.

Bei herkömmlichen Fahrzeugfluidverbindungsanordnungen zum Leiten von Fluid hat sich die Verwendung eines Metall-aufweisenden Fluidstutzens etabliert, auf welchen ein Fluidschlauch aufgeschoben und der aufgeschobene Fluidschlauch anschließend mit einer Metallhülse fixiert wird.

Ein entsprechender Metall-aufweisender Fluidstutzen weist im Gegensatz zu einem aus Kunststoff geformten Fluidstutzen fertigungsbedingte und kostenbedingte Nachteile auf. Ein ausschließlich aus Kunststoff bestehender herkömmlicher Fluidstutzen kann jedoch oftmals den bei einer Verpressung durch eine Metallhülse auftretenden Kräften nicht standhalten.

Es ist die der Anmeldung zugrundeliegende Aufgabe, eine einfach zu fertigende und kostengünstige Fahrzeugfluidverbindungsanordnung zum Leiten von Fluid bereitzustellen.

Diese Aufgabe wird durch die Gegenstände mit den Merkmalen nach den unabhängigen Ansprüchen gelöst. Vorteilhafte Ausführungsformen der Anmeldung sind Gegenstand der Figuren, der Beschreibung und der abhängigen Ansprüche.

Gemäß einem ersten Aspekt der Anmeldung wird die Aufgabe durch eine Fahrzeugfluidverbindungsanordnung zum fluidtechnischen Verbinden von fluidführenden Bauteilen in einem Fahrzeug gelöst, umfassend einen Fahrzeugfluidstutzen zum Leiten eines Fluids in einem Fahrzeug, wobei der Fahrzeugfluidstutzen ausschließlich aus einem Thermoplast geformt ist, und einen Stutzenabschnitt mit einem Tannenbaumprofil aufweist, einen Fluidschlauch zum Leiten des Fluids in dem Fahrzeug, wobei der Fluidschlauch aus einem Elastomer geformt ist, und einen Verbindungsabschnitt aufweist, welcher auf den Stutzenabschnitt des Fahrzeugfluidstutzens aufgeschoben ist, und eine Befestigungshülse, welche aus einem Metall geformt ist, und welche auf den Verbindungsabschnitt des Fluidschlauchs aufgeschoben und verpresst ist, wobei die auf den Verbindungsabschnitt des Fluidschlauchs aufgeschobene und verpresste Befestigungshülse ausgebildet ist, den Verbindungsabschnitt des Fluidschlauchs kraftschlüssig an den Stutzenabschnitt des Fahrzeugfluidstutzens zu pressen, um eine druckstabile fluidtechnische Verbindung zwischen dem Fluidschlauch und dem Fahrzeugfluidstutzen zum Leiten des Fluids zu erreichen.

Dadurch wird der technische Vorteil erreicht, dass die Verwendung eines aus Thermoplast bestehenden Fahrzeugfluidstutzens im Zusammenspiel mit der verpressten metallischen Befestigungshülse eine druckstabile fluidtechnische Verbindung zwischen dem Fluidschlauch und dem Fahrzeugfluidstutzen erreicht wird, welche ein Leiten von Fluid ermöglicht.

Gemäß der vorliegenden Anmeldung ist der Fahrzeugfluidstutzen ausschließlich aus einem Thermoplast geformt, was insbesondere bedeutet, dass der Fahrzeugfluidstutzen keine metallischen Bauteile, insbesondere kein metallisches Stützrohr aufweist. Somit kann der ausschließlich aus dem Thermoplast geformte Fahrzeugfluidstutzen einfach und kostengünstig, insbesondere durch ein Spitzgussverfahren hergestellt werden.

Das Tannenbaumprofil des Stutzenabschnitts des Fahrzeugfluidstutzens stellt hierbei eine verrutschsichere Positionierung des Verbindungsabschnitts des Fluidschlauchs auf dem Stutzenabschnitt des Fahrzeugfluidstutzens sicher.

Wird nun die aus einem Metall geformte Befestigungshülse auf den Verbindungsabschnitt des Fluidschlauchs aufgeschoben und verpresst, ermöglicht die Verpressung der Befestigungshülse eine kraftschlüssige und selbst bei Druckanwendungen ausreichend fluiddichte Befestigung des Verbindungsabschnitts des Fluidschlauchs an dem Stutzenabschnitt des Fahrzeugfluidstutzens.

Damit die Fahrzeugfluidverbindungsanordnung gemäß der vorliegenden Anmeldung eine ausreichend druckstabile fluidtechnische Verbindung zur Leitung des Fluids sicherstellen kann, kann die Fahrzeugfluidverbindungsanordnung gemäß der vorliegenden Anmeldung insbesondere mit Berstdruckanforderungen von bis zu 100 bar, insbesondere von bis zu150 bar betrieben werden.

Insbesondere ist der aus einem Elastomer geformte Fluidschlauch als ein Gummischlauch ausgebildet.

Insbesondere ist die aus einem Metall geformte Befestigungshülse als eine aus Stahl bestehende Befestigungshülse ausgebildet.

Insbesondere weist die Befestigungshülse eine Zylinderform auf.

Insbesondere weist die Befestigungshülse eine umlaufende Befestigungswandung auf, welche einen Innenraum der Befestigungshülse begrenzt.

Gemäß einer Ausführungsform ist das Tannenbaumprofil des Stutzenabschnitts durch eine Mehrzahl von den Stutzenabschnitt umlaufenden Profilerhöhungen gebildet, welche an der Innenseite des aufgeschobenen Fluidschlauchs anliegen, wobei sich an die jeweilige Profilerhöhung des Tannenbaumprofils jeweils eine den Stutzenabschnitt umlaufende Profilvertiefung anschließt.

Dadurch wird der technische Vorteil erreicht, dass die von dem Stutzenabschnitt hervorstehenden Profilerhöhungen des Tannenbaumprofils eine wirksame dichtende Fläche an der Innenseite des aufgeschobenen Fluidschlauchs bilden, und dadurch die fluidtechnisch abdichtenden Eigenschaften der Fahrzeugfluidverbindungsanordnung sicherstellen.

Gemäß einer Ausführungsform weisen die Profilerhöhungen jeweils dem aufgeschobenen Fluidschlauch zugewandte Außenflächen auf, welche sich in Richtung eines Endes des Fahrzeugfluidstutzens verjüngen, um ein vorteilhaftes Aufschieben des Fluidschlauchs auf den Stutzenabschnitt zu ermöglichen.

Dadurch wird der technische Vorteil erreicht, dass die Innenseite des Verbindungsabschnitts des Fluidschlauchs wirksam entlang der sich verjüngenden, d.h. zum Ende des Fahrzeugfluidstutzens geneigten, Außenflächen wirksam aufgeschoben werden kann, um den Fluidschlauch wirksam auf dem Stutzenabschnitt zu positionieren.

Gemäß einer Ausführungsform weisen die Profilerhöhungen jeweils an einer dem Ende des Fahrzeugfluidstutzens abgewandten Seite eine Steilfläche auf, welche sich insbesondere winklig zu einer Längsachse des Stutzenabschnitts erstreckt, um ein Abziehen des aufgeschobenen Fluidschlauchs zu erschweren.

Dadurch wird der technische Vorteil erreicht, dass die entsprechende Steilfläche der Profilerhöhungen einen Widerstand gegen ein Lösen des auf den Fahrzeugfluidstutzen aufgeschobenen Fluidschlauchs sicherstellt.

Gemäß einer Ausführungsform weist der Fahrzeugfluidstutzen an einer dem Stutzenabschnitt abgewandten Seite einen Verbindungsstutzen auf, wobei der Verbindungsstutzen in eine Öffnung eines Fahrzeugbauteils einführbar ist, um den Fahrzeugfluidstutzen an dem Fahrzeugbauteil zu befestigen, wobei der Verbindungsstutzen insbesondere eine den Verbindungsstutzen umlaufende Verbindungsstutzenvertiefung aufweist, in welcher ein Dichtungselement aufgenommen ist.

Dadurch wird der technische Vorteil erreicht, dass der Verbindungsstutzen des Fahrzeugfluidstutzens eine wirksame Befestigung der gesamten Fahrzeugfluidverbindungsanordnung an dem Fahrzeugbauteil ermöglicht.

Hierbei ist das Fahrzeugbauteil insbesondere ein Aggregat des Fahrzeugs, ein Motorbauteil des Fahrzeugs oder ein Getriebebauteil des Fahrzeugs.

Gemäß einer Ausführungsform weist der Fahrzeugfluidstutzen einen den Fahrzeugfluidstutzen umlaufenden Stutzenanschlag auf, an welchem die Befestigungshülse anliegt, wobei der Stutzenanschlag insbesondere zwischen dem Stutzenabschnitt und einem zentralen Bereich des Fahrzeugfluidstutzens angeordnet ist.

Dadurch wird der technische Vorteil erreicht, dass das Aufschieben der Befestigungshülse bis zum Stutzenanschlag eine wirksame Endposition der Befestigungshülse auf dem Verbindungsabschnitt des Fluidschlauchs definiert.

Gemäß einer Ausführungsform weist die Befestigungshülse eine Mehrzahl von die Befestigungshülse umlaufenden Hülsenerhöhungen auf, wobei sich an die jeweilige Hülsenerhöhung der Befestigungshülse jeweils eine die Befestigungshülse umlaufende Hülsenvertiefung anschließt, wobei insbesondere die Hülsenvertiefungen als Abschnitte der Befestigungshülse ausgebildet sind, welche gegenüber den Hülsenerhöhungen einen geringeren Innen- und Außendurchmesser der Befestigungshülse bilden.

Dadurch wird der technische Vorteil erreicht, dass bei einem Verpressen der Befestigungshülse an dem Fahrzeugfluidstutzen, die entsprechenden Hülsenvertiefungen mit dem insbesondere geringeren Innen- und Außendurchmesser das Elastomer des Fluidschlauchs derart stark zusammenpresst, dass das Elastomer zumindest teilweise in den Zwischenbereich zwischen den Hülsenerhöhungen und dem Stutzenabschnitt des Fahrzeugfluidstutzens verdrängt wird, so dass über die gesamte Kontaktfläche des Stutzenabschnitts eine wirksame Abdichtung gegenüber dem Fluidschlauch sichergestellt wird.

Gemäß einer Ausführungsform umfassen die Hülsenerhöhungen eine erste Hülsenerhöhung, welche an einem ersten Hülsenende der Befestigungshülse angeordnet ist und an einem Stutzenanschlag des Fahrzeugfluidstutzens anliegt, und/oder eine zweite Hülsenerhöhung, welche an einem dem ersten Hülsenende gegenüberliegenden zweiten Hülsenende der Befestigungshülse angeordnet ist, und/oder eine dritte Hülsenerhöhung, welche mittig in der Befestigungshülse zwischen der ersten und zweiten Hülsenerhöhung angeordnet ist.

Dadurch wird der technische Vorteil erreicht, dass durch das endseitige Vorsehen der ersten und zweiten Hülsenerhöhung, sowie durch das mittige Vorsehen der dritten Hülsenerhöhung, eine gleichmäßige Verteilung der Hülsenerhöhungen und damit auch ein gleichmäßiges Druckprofil der Befestigungshülse an dem Fluidschlauch sichergestellt wird.

Gemäß einer Ausführungsform umfassen die Hülsenvertiefungen eine erste Hülsenvertiefung, welche zwischen der ersten Hülsenerhöhung und der dritten Hülsenerhöhung angeordnet ist, und/oder eine zweite Hülsenvertiefung, welche zwischen der dritten Hülsenerhöhung und der zweiten Hülsenerhöhung angeordnet ist.

Dadurch wird der technische Vorteil erreicht, dass ebenfalls eine gleichmäßige Verteilung der Hülsenvertiefungen und damit auch ein gleichmäßiges Druckprofil der Befestigungshülse an dem Fluidschlauch sichergestellt wird.

Gemäß einer Ausführungsform ist der Fahrzeugfluidstutzen ausschließlich aus einem Hochleistungsthermoplast-Material, insbesondere ausschließlich aus Polyphenylensulfid (PPS), Polyphthalamid (PPA), teilaromatischen Polyamiden oder aliphatischen Polyamiden, beispielsweise PA66, PA66+6, PA610, PA612, etc., geformt.

Dadurch wird der technische Vorteil erreicht, dass das entsprechende Hochleistungsthermoplast-Material eine ausreichende Druckstabilität aufweist, um den beim Verpressen der Befestigungshülse auftretenden Kräften standhalten zu können.

Insbesondere ist das Hochleistungsthermoplast-Material durch eine Dauergebrauchstemperatur von mehr als 150°C, eine ausreichende Druckbeständigkeit, sowie eine chemische Beständigkeit gegenüber allen im Fahrzeug vorkommenden Fluiden gekennzeichnet.

Insbesondere umfasst ein entsprechendes Hochleistungsthermoplast-Material des Fahrzeugfluidstutzens ein teilkristallines Hochleistungsthermoplast-Material.

Gemäß einer Ausführungsform weist der Fahrzeugfluidstutzen einen zentralen Bereich auf, welcher sich entlang einer zentralen Längsachse erstreckt, wobei der Stutzenabschnitt insbesondere als ein gegenüber dem zentralen Bereich abgewinkelter Stutzenabschnitt ausgebildet ist, wobei sich der abgewinkelter Stutzenabschnitt entlang einer Längsachse erstreckt, welche sich gegenüber der zentralen Längsachse des zentralen Bereichs winklig erstreckt, oder wobei der Stutzenabschnitt insbesondere als ein gegenüber dem zentralen Bereich gerade erstreckender Stutzenabschnitt ausgebildet ist, wobei sich der gerade erstreckende Stutzenabschnitt entlang einer Längsachse erstreckt, welche sich gegenüber der zentralen Längsachse des zentralen Bereichs parallel erstreckt.

Dadurch wird der technische Vorteil erreicht, dass je nach verfügbaren Bauraum ein sich gerade erstreckender Stutzenabschnitt oder ein abgewinkelter Stutzenabschnitt vorteilhaft sein kann.

Gemäß einer Ausführungsform umfasst die Fahrzeugfluidverbindungsanordnung ferner einen weiteren Fahrzeugfluidstutzen zum Leiten eines Fluids in dem Fahrzeug, welcher ausschließlich aus einem Thermoplast geformt ist, und einen weiteren Stutzenabschnitt mit einem Tannenbaumprofil aufweist, einen weiteren Fluidschlauch zum Leiten des Fluids in dem Fahrzeug, welcher aus einem Elastomer geformt ist, und einen weiteren Verbindungsabschnitt aufweist, welcher auf den weiteren Stutzenabschnitt des weiteren Fahrzeugfluidstutzens aufgeschoben ist, und eine weitere Befestigungshülse, welche aus einem Metall geformt ist, und welche auf den weiteren Verbindungsabschnitt des weiteren Fluidschlauchs aufgeschoben und verpresst ist, wobei die auf den weiteren Verbindungsabschnitt des Fluidschlauchs aufgeschobene und verpresste weitere Befestigungshülse ausgebildet ist, den weiteren Verbindungsabschnitt des weiteren Fluidschlauchs kraftschlüssig mit dem weiteren Stutzenabschnitt des weiteren Fahrzeugfluidstutzens zu verbinden, um eine druckstabile fluidtechnische Verbindung zwischen dem weiteren Fluidschlauch und dem weiteren Fahrzeugfluidstutzen zu erreichen, wobei die Fahrzeugfluidverbindungsanordnung ferner ein Fixierelement aufweist, welches mit dem Fahrzeugfluidstutzen und dem weiteren Fahrzeugfluidstutzen verbunden ist, um den Fahrzeugfluidstutzen und den weiteren Fahrzeugfluidstutzen aneinander zu fixieren, insbesondere stoffschlüssig, formschlüssig und/oder kraftschlüssig zu fixieren.

Dadurch wird der technische Vorteil erreicht, dass das Fixierelement eine wirksame Positionierung und Fixierung des Fahrzeugfluidstutzens und des weiteren Fahrzeugfluidstutzens nebeneinander ermöglicht, um beispielsweise über entsprechende Verbindungsstutzen die beiden Fahrzeugfluidstutzen wirksam an einem Fahrzeugbauteil zu fixieren.

Gemäß einer Ausführungsform weist das Fixierelement einen ersten Fixierbereich, insbesondere zwei erste Fixierschenkel, auf, welcher ausgebildet ist, einen Befestigungsbereich des Fahrzeugfluidstutzens zu umgreifen, und weist das Fixierelement einen zweiten Fixierbereich, insbesondere zwei zweite Fixierschenkel, auf, welcher ausgebildet ist, einen weiteren Befestigungsbereich des weiteren Fahrzeugfluidstutzens zu umgreifen, um den Fahrzeugfluidstutzen und den weiteren Fahrzeugfluidstutzen aneinander zu fixieren.

Dadurch wird der technische Vorteil erreicht, dass durch die entsprechenden Fixierbereiche, bzw. Fixierschenkel eine besonders wirksame Befestigung zwischen Fixierelement und dem jeweiligen Fahrzeugfluidstutzen erreicht wird.

Gemäß einer Ausführungsform sind der Befestigungsbereich und der weitere Befestigungsbereich jeweils endseitig durch Befestigungsrippen begrenzt, wobei der erste und zweite Fixierbereich an den jeweiligen Befestigungsrippen anliegen, um eine rutschsichere Fixierung sicherzustellen.

Dadurch wird der technische Vorteil erreicht, dass der durch Befestigungsrippen begrenzte Befestigungsbereich eine wirksame Positionierung des jeweiligen Fixierbereichs des Fixierelements sicherstellt.

Gemäß einem zweiten Aspekt wird die vorliegende Aufgabe gelöst durch ein Verfahren zum Herstellen einer Fahrzeugfluidverbindungsanordnung, wobei das Verfahren die folgenden Verfahrensschritte umfasst, Bereitstellen eines Fahrzeugfluidstutzens zum Leiten eines Fluids in einem Fahrzeug, wobei der Fahrzeugfluidstutzen ausschließlich aus einem Thermoplast geformt ist, und einen Stutzenabschnitt mit einem Tannenbaumprofil aufweist, Aufschieben eines Verbindungsabschnitts eines aus einem Elastomer geformten Fluidschlauchs zum Leiten des Fluids in dem Fahrzeug auf den Stutzenabschnitt des Fahrzeugfluidstutzens, Aufschieben einer aus einem Metall geformten Befestigungshülse auf den Verbindungsabschnitt des Fluidschlauchs, Verpressen der auf den Verbindungsabschnitt des Fluidschlauchs aufgeschobenen Befestigungshülse, um den Verbindungsabschnitt des Fluidschlauchs kraftschlüssig an den Stutzenabschnitt des Fahrzeugfluidstutzens zu pressen, und um eine druckstabile fluidtechnische Verbindung zwischen dem Fluidschlauch und dem Fahrzeugfluidstutzen zu erreichen.

Dadurch wird der technische Vorteil erreicht, dass eine Fahrzeugfluidverbindungsanordnung bereitgestellt wird, welche eine wirksame fluiddichte Verpressung eines Fahrzeugfluidstutzens und eines Fluidschlauchs für Hochdruckanwendungen ermöglicht.

Die für die Fahrzeugfluidverbindungsanordnung gemäß dem ersten Aspekt beschriebenen vorteilhaften Ausführungsformen sind ebenfalls vorteilhafte Ausführungsformen für das Verfahren zum Herstellen einer Fahrzeugfluidverbindungsanordnung gemäß dem zweiten Aspekt.

Ausführungsbeispiele der Anmeldung sind in den Zeichnungen dargestellt und werden im Folgenden näher beschrieben.

Es zeigen:
- Fig. 1: eine perspektivische Ansicht einer Fahrzeugfluidverbindungsanordnung mit einem Fahrzeugfluidstutzen und einem Fluidschlauch gemäß einer ersten Ausführungsform;
- Fig. 2: eine perspektivische Ansicht der in Fig. 1 gezeigten Fahrzeugfluidverbindungsanordnung mit einer Befestigungshülse;
- Fig. 3: eine perspektivische Ansicht der in Fig. 2 gezeigten Fahrzeugfluidverbindungsanordnung gemäß einer Röntgenaufnahme;
- Fig. 4: eine perspektivische Ansicht eines Fahrzeugfluidstutzens einer Fahrzeugfluidverbindungsanordnung gemäß einer weiteren Ausführungsform;
- Fig. 5: eine perspektivische Ansicht der in Fig. 2 gezeigten Fahrzeugfluidverbindungsanordnung mit einem Fixierelement;
- Fig. 6: eine perspektivische Ansicht der in Fig. 5 gezeigten Fahrzeugfluidverbindungsanordnung mit einem weiteren Fahrzeugfluidstutzen, einem weiteren Fluidschlauch und einer weiteren Befestigungshülse; und
- Fig. 7: eine schematische Darstellung eines Verfahrens zum Herstellen einer Fahrzeugfluidverbindungsanordnung.

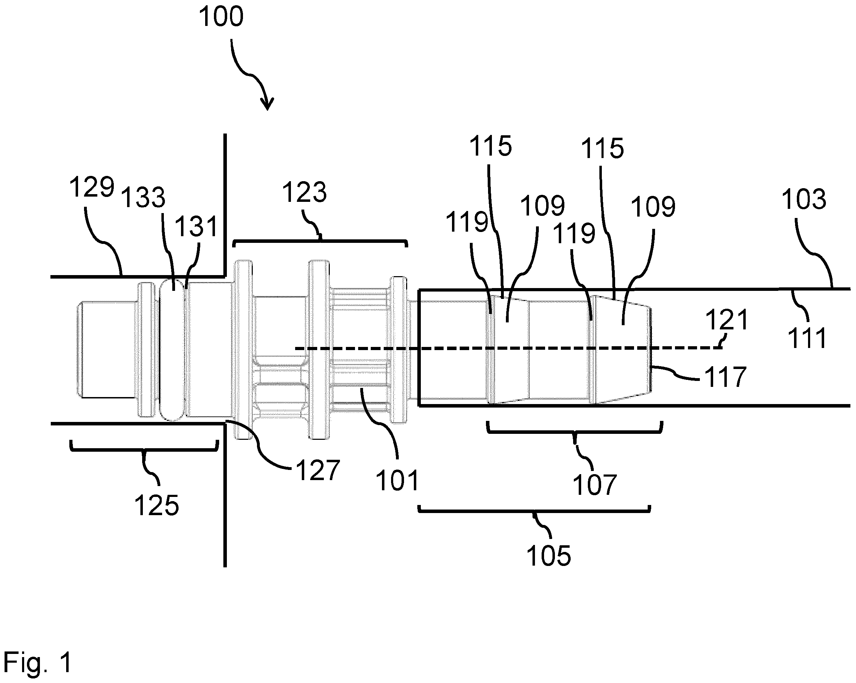

Fig. 1 zeigt eine perspektivische Ansicht einer Fahrzeugfluidverbindungsanordnung mit einem Fahrzeugfluidstutzen und einem Fluidschlauch gemäß einer ersten Ausführungsform.

Entsprechende Fahrzeugfluidverbindungsanordnungen, d.h. entsprechende in einem Fahrzeug angeordnete Verbindungsanordnungen zum fluidtechnischen Verbinden von fluidführenden Bauteilen, nehmen im Fahrzeugbau eine entscheidende Bedeutung ein, da in einem Fahrzeug eine Vielzahl von unterschiedlichsten Fluiden, wie z.B. Kraftstoff, Getriebeöl, Luft, Kühlflüssigkeit, etc., zwischen unterschiedlichsten Bauteilen geleitet wird.

Im Gegensatz zu einer Vielzahl von herkömmlichen Fahrzeugfluidverbindungsanordnungen, welche z.B. beim Leiten von Kühlwasser in einem Niederdruckbereich mit maximal 5 bar zur Anwendung kommen, ist die in Fig. 1 dargestellte Fahrzeugfluidverbindungsanordnung 100 gemäß der vorliegenden Anmeldung zum Leiten von Fluid ausgebildet, d.h. ist in der Lage eine fluidtechnische Verbindung zwischen fluidführenden Bauteilen eines Fahrzeugs bereitzustellen, welche Fluid in einem Druckbereich von bis zu 100 bar führen kann.

Insbesondere ist die in Fig. 1 dargestellte Fahrzeugfluidverbindungsanordnung 100 gemäß der vorliegenden Anmeldung zum Leiten von unter entsprechend hohem Druck stehenden Getriebeöl ausgebildet.

Aus diesem Grund stellen sich an die in Fig. 1 dargestellte Fahrzeugfluidverbindungsanordnung 100 zum Leiten von Fluid, insbesondere zum Leiten von unter hohem Druck stehenden Getriebeöl, eine Vielzahl von hohen Anforderungen in Bezug auf Temperaturbeständigkeit, Druckbeständigkeit und Medienbeständigkeit.

Herkömmliche Fahrzeugfluidverbindungsanordnungen zum Leiten von Fluid basieren üblicherweise auf einer hydraulischen Verpressung eines Fluidschlauchs an einen Metall-aufweisenden Fluidstutzen mittels einer Metallhülse unter hydraulischem Druck, um eine benötigte Verpresskraft bereitzustellen, welche deutlich über einer von einer Federbandschelle oder einer Schlauchschelle bereitzustellenden Kraft liegt.

Aus fertigungstechnischen und auch aus kostentechnischen Gründen bestand seit langem der Bedarf den entsprechenden Metall-aufweisenden Fluidstutzen einer herkömmlichen Fahrzeugfluidverbindungsanordnung durch einen Kunststoffstutzen zu ersetzen, was bisher aufgrund der hohen Verpresskräfte von teilweise mehr als 15 bar beim hydraulischen Verpressen mit einer Metallhülse zu einer Zerstörung entsprechenden Kunststoffstutzen führte.

Die in der Fig. 1 der vorliegen Anmeldung gezeigte Fahrzeugfluidverbindungsanordnung 100 weist nun erstmals einen Fahrzeugfluidstutzen 101 zum Leiten eines Fluids auf, welcher ausschließlich aus einem Thermoplast geformt ist. Wie in der Fig. 1 lediglich schematisch dargestellt ist, wird auf den Fahrzeugfluidstutzen 101 ein aus Elastomer bestehender Fluidschlauch 103 der Fahrzeugfluidverbindungsanordnung 100 aufgeschoben.

Auch wenn dies in der Fig. 1 der vorliegenden Anmeldung nicht dargestellt ist, weist die Fahrzeugfluidverbindungsanordnung 100 ferner eine Befestigungshülse 135 aus Metall auf, welche auf den Fluidschlauch 103 aufgeschoben und verpresst wird, um eine druckstabile fluidtechnische Verbindung zwischen dem Fluidschlauch 103 und dem Fahrzeugfluidstutzen 101 zu erreichen.

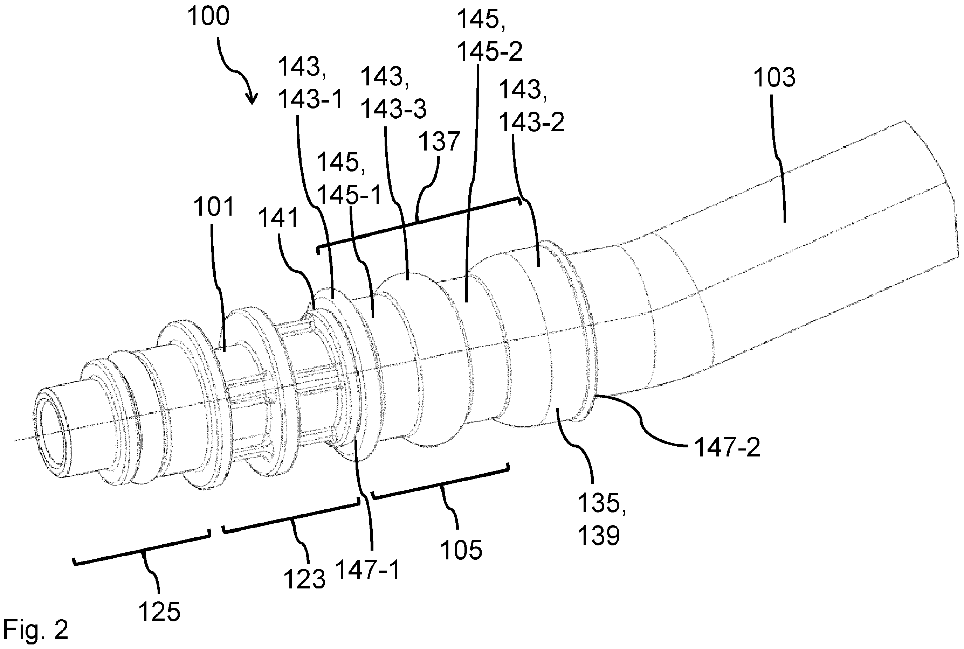

Für weitere Details in Bezug auf die Befestigungshülse 135 der Fahrzeugfluidverbindungsanordnung 100 wird auf die nachfolgende Fig. 2 der vorliegenden Anmeldung verwiesen.

Die außerordentliche chemische, mechanische und thermische Widerstandsfähigkeit des Fahrzeugfluidstutzens 101 wird durch das gewählte Thermoplast-Material bereitgestellt, welches insbesondere als ein Hochleistungsthermoplast-Material gewählt ist, welches eine Dauergebrauchstemperatur von mehr als 150°C, eine Druckbeständigkeit gegenüber Drücken von mindestens 50 bar, sowie eine chemische Beständigkeit gegenüber den Bestandteilen von Getriebeöl aufweist.

Insbesondere umfasst ein entsprechendes Hochleistungsthermoplast-Material des Fahrzeugfluidstutzens 101 ein teilkristallines Hochleistungsthermoplast-Material.

Insbesondere ist ein entsprechendes Hochleistungsthermoplast-Material, insbesondere teilkristallines Hochleistungsthermoplast-Material ausgewählt aus Polyphenylensulfid (PPS), Polyphthalamid (PPA), teilaromatischen Polyamiden oder aliphatischen Polyamiden.

Wie aus der Fig. 1 hervorgeht, weist der Fahrzeugfluidstutzen 101 einen Stutzenabschnitt 105 mit einem Tannenbaumprofil 107 auf, auf welches der Fluidschlauch 103 aufgeschoben ist.

Das Tannenbaumprofil 107 des Stutzenabschnitts 105 wird insbesondere durch eine Mehrzahl von den Stutzenabschnitt 105 umlaufende Profilerhöhungen 109 gebildet, welche an der Innenseite 111 des aufgeschobenen Fluidschlauchs 103 anliegen, wobei sich an die jeweilige Profilerhöhung 109 des Tannenbaumprofils 107 insbesondere jeweils eine den Stutzenabschnitt 105 umlaufende Profilvertiefung 113 anschließt.

Insbesondere weisen die Profilerhöhungen 109 jeweils dem aufgeschobenen Fluidschlauch 103 zugewandte Außenflächen 115 auf, welche sich in Richtung eines Endes 117 des Fahrzeugfluidstutzens 101 verjüngen, um ein vorteilhaftes Aufschieben des Fluidschlauchs 103 auf den Stutzenabschnitt 105 zu ermöglichen.

Insbesondere weisen die Profilerhöhungen 109 jeweils an einer dem Ende 117 des Fahrzeugfluidstutzens 101 abgewandten Seite eine Steilfläche 119 auf, welche sich insbesondere winklig zu einer Längsachse 121 des Stutzenabschnitts 105 erstreckt, um ein Abziehen des aufgeschobenen Fluidschlauchs 103 zu erschweren.

Der Fahrzeugfluidstutzen 101 weist ferner insbesondere einen zentralen Bereich 123 auf, von welchem sich der Stutzenabschnitt 105 erstreckt.

Der Fahrzeugfluidstutzen 101 weist ferner insbesondere an einer dem Stutzenabschnitt 105 abgewandten Seite einen Verbindungsstutzen 125 auf, welcher in eine Öffnung 127 eines in Fig. 1 lediglich schematisch dargestellten Fahrzeugbauteils 129 einführbar ist, um den Fahrzeugfluidstutzen 101 an dem Fahrzeugbauteil 129 zu befestigen.

Der Verbindungsstutzen 125 erstreckt sich insbesondere von dem zentralen Bereich 123 aus in eine dem Stutzenabschnitt 105 entgegengesetzte Richtung.

Der Verbindungsstutzen 125 weist insbesondere eine den Verbindungsstutzen 125 umlaufende Verbindungsstutzenvertiefung 131 auf, in welcher ein Dichtungselement 133, insbesondere O-Ring, aufgenommen ist, um eine wirksame fluidtechnische Abdichtung zwischen dem Verbindungsstutzen 125 und dem Fahrzeugbauteil 129 sicherzustellen.

Das Fahrzeugbauteil 129 kann ein Aggregat des Fahrzeugs, ein Motorbauteil des Fahrzeugs oder ein Getriebebauteil des Fahrzeugs umfassen, um eine wirksame fluidtechnische Anbindung des Getriebeöl-führenden Fluidschlauchs 103 sicherzustellen.

Somit stellt die in Fig. 1 dargestellte Fahrzeugfluidverbindungsanordnung 100 umfassend den in Fig. 1 dargestellten Fahrzeugfluidstutzen 101 und den in Fig. 1 dargestellten Fluidschlauch 103, sowie die in Fig. 2 dargestellte Befestigungshülse 135 eine wirksame medienbeständige, temperaturbeständige und druckbeständige fluidtechnische Verbindung für ein Fluid zwischen dem Fahrzeugbauteil 129 und dem Fluidschlauch 103 sicher.

Fig. 2 zeigt eine perspektivische Ansicht der in Fig. 1 gezeigten Fahrzeugfluidverbindungsanordnung mit einer Befestigungshülse.

Die in Fig. 2 gezeigte Fahrzeugfluidverbindungsanordnung 100 weist den in Fig. 1 gezeigten Fahrzeugfluidstutzen 101, sowie den in Fig. 1 lediglich schematisch gezeigten Fluidschlauch 103, sowie eine aus Metall, insbesondere Stahl, gebildete Befestigungshülse 135, auf.

Die gemäß der in Fig. 2 gezeigten Fahrzeugfluidverbindungsanordnung 100 wurde dadurch hergestellt, dass ein in Fig. 2 nicht dargestellter Verbindungsabschnitt 137 des Fluidschlauchs 103 auf den Stutzenabschnitt 105 des Fahrzeugfluidstutzens 101 aufgeschoben wurde. Anschließend wurde die Befestigungshülse 135 auf den Verbindungsabschnitt 137 des Fluidschlauchs 103 aufgeschoben und wiederum anschließend wurde die auf den Verbindungsabschnitt 137 des Fluidschlauchs 103 aufgeschobene Befestigungshülse 135 kraftschlüssig an den Stutzenabschnitt 105 des Fahrzeugfluidstutzens 101 verpresst.

In der Fig. 2 ist der Stutzenabschnitt 105, der Verbindungsstutzen 125 und der dazwischen angeordnete zentrale Bereich 123 des Fahrzeugfluidstutzens 101 lediglich schematisch dargestellt. Für die Details hinsichtlich des Fahrzeugfluidstutzens 101 wird auf die Ausführungen zur Fig. 1 verwiesen.

Die in Fig. 2 dargestellte metallische Befestigungshülse 135 ist insbesondere zylinderförmig geformt und weist insbesondere eine Hülsenwandung 139 auf, welche einen in Fig. 2 nicht dargestellten Hülseninnenraum begrenzt. Die Hülsenwandung 139 der Befestigungshülse 135 liegt an einer in Fig. 2 nicht dargestellten Außenseite des Verbindungsabschnitts 137 des Fluidschlauchs 103 an.

Wie aus der Fig. 2 ferner hervorgeht, weist der Fahrzeugfluidstutzen 101 einen den Fahrzeugfluidstutzen 101 umlaufenden Stutzenanschlag 141 auf, an welchem die Befestigungshülse 135 anliegt, wobei der Stutzenanschlag 141 insbesondere zwischen dem Stutzenabschnitt 105 und dem zentralen Bereich 123 des Fahrzeugfluidstutzens 101 angeordnet ist. Der Stutzenanschlag 141 legt somit die Endposition der aufgeschobenen Befestigungshülse 135 fest.

Aus der Fig. 2 geht ferner hervor, dass die Befestigungshülse 135 eine Mehrzahl von die Befestigungshülse 135 umlaufenden Hülsenerhöhungen 143 aufweist, wobei sich an die jeweilige Hülsenerhöhung 143 der Befestigungshülse 135 jeweils eine die Befestigungshülse 135 umlaufende Hülsenvertiefung 145 anschließt.

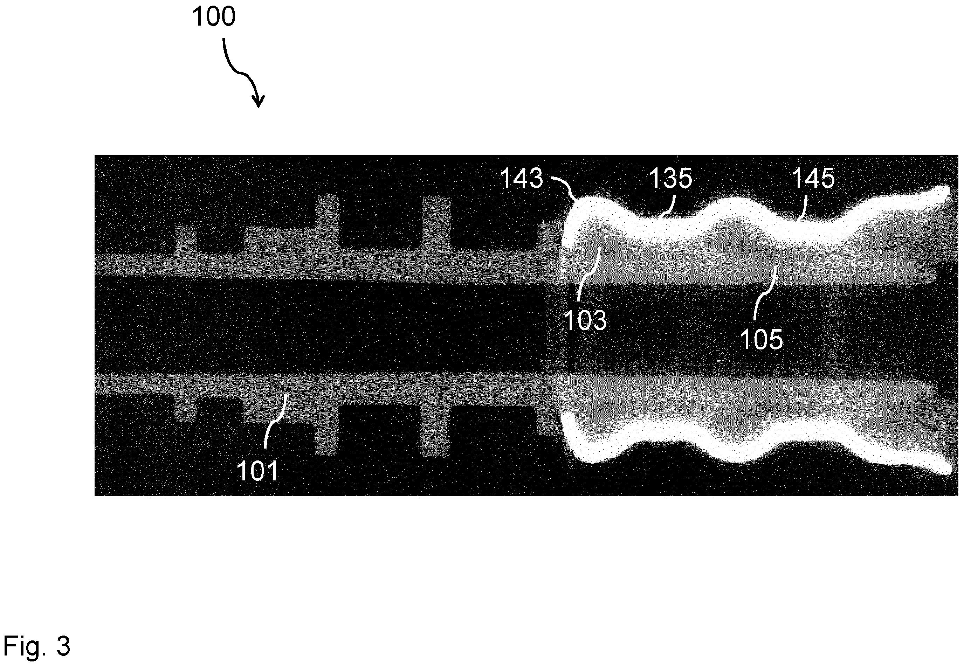

Hierbei sind insbesondere die Hülsenvertiefungen 145 als Abschnitte der Befestigungshülse 135 ausgebildet, welche gegenüber den Hülsenerhöhungen 143 einen geringeren Innen-und Außendurchmesser der Befestigungshülse 135 bilden, so dass die Hülsenvertiefungen 145 der verpressten Befestigungshülse 135 eine besonders hohe Anpresskraft auf den Fluidschlauch 103 und den darunter liegenden Fahrzeugfluidstutzen 101 bereitstellen, wie dies beispielsweise aus der nachfolgend dargestellten Fig. 3 hervorgeht.

Insbesondere umfassen die Hülsenerhöhungen 143 eine erste Hülsenerhöhung 143-1, welche an einem ersten Hülsenende 147-1 der Befestigungshülse 135 angeordnet ist und an dem Stutzenanschlag 141 des Fahrzeugfluidstutzens 101 anliegt, eine zweite Hülsenerhöhung 143-2, welche an einem dem ersten Hülsenende 147-1 gegenüberliegenden zweiten Hülsenende 147-2 der Befestigungshülse 135 angeordnet ist, und eine dritte Hülsenerhöhung 143-3, welche mittig in der Befestigungshülse 135 zwischen der ersten und zweiten Hülsenerhöhung 143-1, 143-2 angeordnet ist.

Insbesondere umfassen die Hülsenvertiefungen 145 eine erste Hülsenvertiefung 145-1, welche zwischen der ersten Hülsenerhöhung 143-1 und der dritten Hülsenerhöhung 143-3 angeordnet ist, sowie eine zweite Hülsenvertiefung 145-2, welche zwischen der dritten Hülsenerhöhung 143-3 und der zweiten Hülsenerhöhung 143-2 angeordnet ist.

Fig. 3 zeigt eine perspektivische Ansicht der in Fig. 2 gezeigten Fahrzeugfluidverbindungsanordnung gemäß einer Röntgenaufnahme.

Aus der Fig. 3 geht hervor, dass durch das Verpressen der Befestigungshülse 135 auf den elastomeren Fluidschlauch 103, welcher auf den Stutzenabschnitt 105 des Fahrzeugfluidstutzens 101 aufgeschoben ist, durch die Verpresskräfte das Elastomer des Fluidschlauchs 103 aus den Zwischenbereichen zwischen den Hülsenvertiefungen 145 der Befestigungshülse 135 und dem Fahrzeugfluidstutzen 101 in die entsprechenden Zwischenbereiche zwischen den Hülsenerhöhungen 143 der Befestigungshülse 135 und dem Fahrzeugfluidstutzen 101 verdrängt wird, so dass eine besonders gute fluidtechnische Abdichtung erreicht wird.

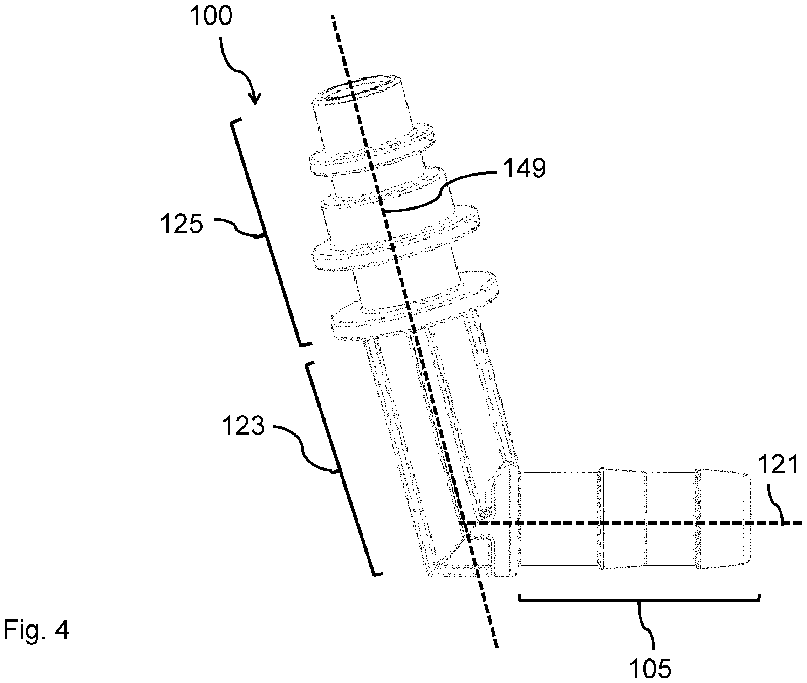

Fig. 4 zeigt eine perspektivische Ansicht eines Fahrzeugfluidstutzens einer Fahrzeugfluidverbindungsanordnung gemäß einer weiteren Ausführungsform.

Der in Fig. 4 gezeigte Fahrzeugfluidstutzen 101 gemäß der weiteren Ausführungsform unterscheidet sich von dem in der Fig. 1 gezeigten Fahrzeugfluidstutzen 101 gemäß der ersten Ausführungsform lediglich dadurch, dass der in Fig. 4 gezeigte Fahrzeugfluidstutzen 101 einen Stutzenabschnitt 105 abweist, welcher gegenüber einem zentralen Bereich 123 des Fahrzeugfluidstutzens 101 abgewinkelt ist, um eine Bauraum-optimierte Fluidführung sicherzustellen.

Insbesondere erstreckt sich der abgewinkelte Stutzenabschnitt 105 entlang einer Längsachse 121, welche sich gegenüber der zentralen Längsachse 149 des zentralen Bereichs 123 winklig erstreckt.

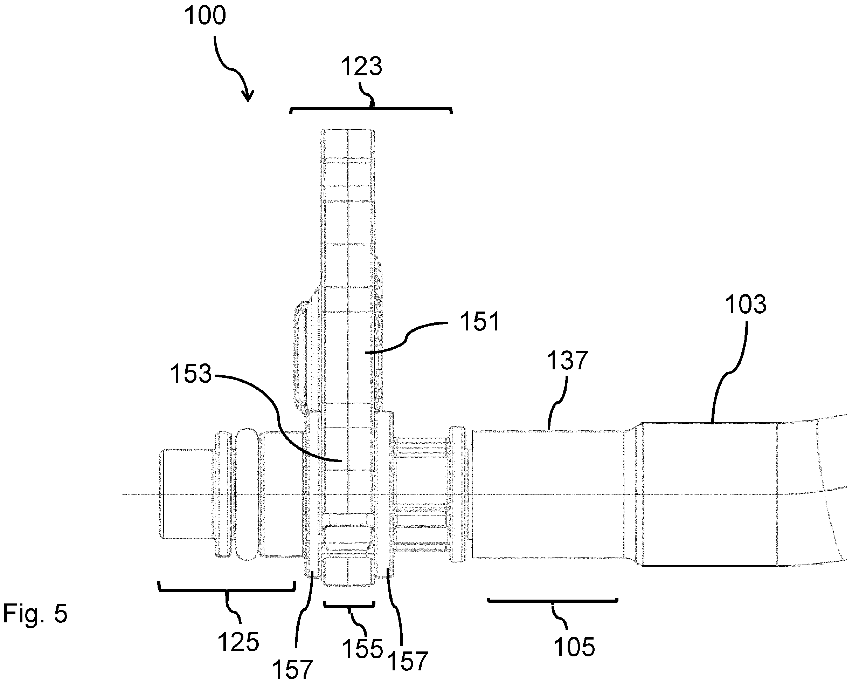

Fig. 5 zeigt eine perspektivische Ansicht der in Fig. 2 gezeigten Fahrzeugfluidverbindungsanordnung mit einem Fixierelement.

Die in Fig. 5 dargestellte Fahrzeugfluidverbindungsanordnung 100 weist ein Fixierelement 151 auf, welches mit dem Fahrzeugfluidstutzen 101 verbunden ist, und welches mit einem in Fig. 5 nicht dargestellten weiteren Fahrzeugfluidstutzen 101-1 verbunden ist, um den Fahrzeugfluidstutzen 101 und den weiteren Fahrzeugfluidstutzen 101-1 aneinander zu fixieren, insbesondere stoffschlüssig, formschlüssig und/oder kraftschlüssig aneinander zu fixieren.

Auch wenn dies in der Ansicht gemäß der Fig. 5 nur beschränkt darstellbar ist, weist das Fixierelement 151 hierbei insbesondere einen ersten Fixierbereich 153 auf, welcher ausgebildet ist, einen Befestigungsbereich 155 des Fahrzeugfluidstutzens 101 zu umgreifen, um den Fahrzeugfluidstutzen 101 an dem Fixierelement 151 zu fixieren.

Der Befestigungsbereich 155 des Fahrzeugfluidstutzens 101 ist hierbei insbesondere im zentralen Bereich 123 des Fahrzeugfluidstutzens 101 angeordnet. Der Befestigungsbereich 155 des Fahrzeugfluidstutzens 101 wird hierbei endseitig durch umlaufende Befestigungsvorsprünge 157 begrenzt. Hierbei liegt der erste Fixierbereich 153 an den umlaufenden Befestigungsvorsprüngen 157 an, um eine rutschsichere Fixierung zu erreichen.

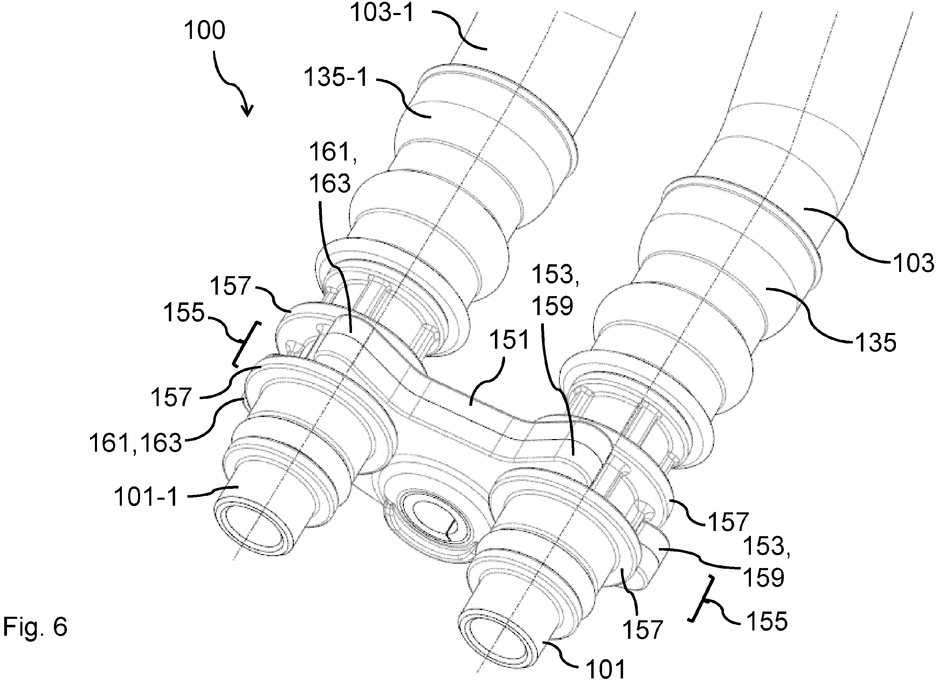

Für weitere Details hierzu wird auf die nachfolgende Fig. 6 verwiesen.

Fig. 6 zeigt eine perspektivische Ansicht der in Fig. 5 gezeigten Fahrzeugfluidverbindungsanordnung mit einem weiteren Fahrzeugfluidstutzen, einem weiteren Fluidschlauch und einer weiteren Befestigungshülse.

Aus der Fig. 6 kann vorteilhaft entnommen werden, wie zwei erste Fixierschenkel 159 des ersten Fixierbereichs 153 des Fixierelements 151 den Befestigungsbereich 155 des Fahrzeugfluidstutzens 101 umgreifen, und wie zwei zweite Fixierschenkel 161 des zweiten Fixierbereichs 163 des Fixierelements 151 einen Befestigungsbereich 155 eines weiteren Fahrzeugfluidstutzens 101-1 umgreifen.

Der weitere Fahrzeugfluidstutzen 101-1 ist entsprechend mit einem weiteren Fluidschlauch 103-1 durch eine weiteren Befestigungshülse 135-1 fluidtechnisch verbunden. Der weitere Fahrzeugfluidstutzen 101-1 ist hierbei identisch zum Fahrzeugfluidstutzen 101, der weiteren Fluidschlauch 103-1 ist hierbei identisch zum Fluidschlauch 103, und die weitere Befestigungshülse 135-1 ist hierbei identisch zur Befestigungshülse 135. Für die detaillierten Ausführungen hierzu wird auf die vorangegangenen Ausführungen verwiesen.

Somit wird durch das Fixierelement 151 eine wirksame Fixierung und Positionierung der beiden Fahrzeugfluidstutzen 101, 101-1 zueinander sichergestellt, so dass beide Fahrzeugfluidstutzen 101, 101-1 über ihre jeweiligen Verbindungsstutzen 125, 125-1 nebeneinander mit einem entsprechenden Fahrzeugbauteil 129 vorteilhaft verbunden werden können.

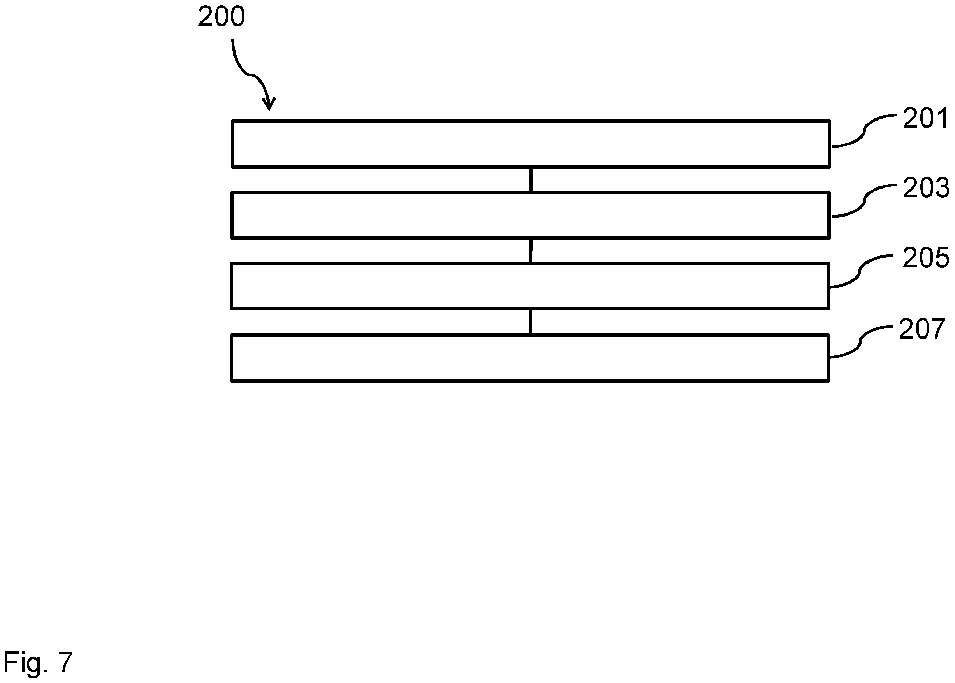

Fig. 7 zeigt eine schematische Darstellung eines Verfahrens zum Herstellen einer Fahrzeugfluidverbindungsanordnung.

Das Verfahren 200 umfasst als ersten Verfahrensschritt das Bereitstellen 201 eines Fahrzeugfluidstutzens 101 zum Leiten eines Fluids in einem Fahrzeug, wobei der Fahrzeugfluidstutzen 101 ausschließlich aus einem Thermoplast geformt ist, und einen Stutzenabschnitt 105 mit einem Tannenbaumprofil 107 aufweist.

Das Verfahren 200 umfasst als zweiten Verfahrensschritt das Aufschieben 203 eines Verbindungsabschnitts 137 eines aus einem Elastomer geformten Fluidschlauchs 103 zum Leiten des Fluids in dem Fahrzeug auf den Stutzenabschnitt 105 des Fahrzeugfluidstutzens 101.

Das Verfahren 200 umfasst als dritten Verfahrensschritt das Aufschieben 205 einer aus einem Metall geformten Befestigungshülse 135 auf den Verbindungsabschnitt 137 des Fluidschlauchs 103.

Das Verfahren 200 umfasst als vierten Verfahrensschritt das Verpressen 207 der auf den Verbindungsabschnitt 137 des Fluidschlauchs 103 aufgeschobenen Befestigungshülse 135, um den Verbindungsabschnitt 137 des Fluidschlauchs 103 kraftschlüssig an den Stutzenabschnitt 105 des Fahrzeugfluidstutzens 101 zu pressen, und um eine druckstabile fluidtechnische Verbindung zwischen dem Fluidschlauch 103 und dem Fahrzeugfluidstutzen 101 zu erreichen.

Alle in Verbindung mit einzelnen Ausführungsformen der Anmeldung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Anmeldung ist durch die Ansprüche gegeben und wird durch die in der Beschreibung erläuterten oder den Figuren gezeigten Merkmale nicht beschränkt.

### BEZUGSZEICHENLISTE

- 100: Fahrzeugfluidverbindungsanordnung
- 101: Fahrzeugfluidstutzen
- 101-1: Weiterer Fahrzeugfluidstutzen
- 103: Fluidschlauch
- 103-1: Weiterer Fluidschlauch
- 105: Stutzenabschnitt des Fahrzeugfluidstutzens
- 107: Tannenbaumprofil
- 109: Profilerhöhung
- 111: Innenseite des Fluidschlauchs
- 113: Profilvertiefung
- 115: Außenfläche der Profilerhöhung
- 117: Ende des Fahrzeugfluidstutzens
- 119: Steilfläche der Profilerhöhung
- 121: Längsachse des Stutzenabschnitts
- 123: Zentraler Bereich des Fahrzeugfluidstutzens
- 125: Verbindungsstutzen des Fahrzeugfluidstutzens
- 127: Öffnung des Fahrzeugbauteils
- 129: Fahrzeugbauteil
- 131: Verbindungsstutzenvertiefung
- 133: Dichtungselement
- 135: Befestigungshülse
- 135-1: Weitere Befestigungshülse
- 137: Verbindungsabschnitt des Fluidschlauchs
- 137-1: Weiterer Verbindungsabschnitt des weiteren Fluidschlauchs
- 139: Hülsenwandung der Befestigungshülse
- 141: Stutzenanschlag
- 143: Hülsenerhöhung
- 143-1: Erste Hülsenerhöhung
- 143-2: Zweite Hülsenerhöhung
- 143-3: Dritte Hülsenerhöhung
- 145: Hülsenvertiefung
- 145-1: Erste Hülsenvertiefung
- 145-2: Zweite Hülsenvertiefung
- 147-1: Erstes Hülsenende
- 147-2: Zweites Hülsenende
- 149: Längsachse des zentralen Bereichs des Fahrzeugfluidstutzens
- 151: Fixierelement
- 153: Erster Fixierbereich des Fixierelements
- 155: Befestigungsbereich des Fahrzeugfluidstutzens
- 155-1: Weiterer Befestigungsbereich des Fahrzeugfluidstutzens
- 157: Befestigungsvorsprung des Fahrzeugfluidstutzens
- 159: Erster Fixierschenkel des ersten Fixierbereich des Fixierelements
- 161: Zweiter Fixierschenkel des zweiten Fixierbereich des Fixierelements
- 163: Zweiter Fixierbereich des Fixierelements
- 200: Verfahren zum Herstellen einer Fahrzeugfluidverbindungsanordnung
- 201: Erster Verfahrensschritt: Bereitstellen eines Fahrzeugfluidstutzens
- 203: Zweiter Verfahrensschritt: Aufschieben eines Verbindungsabschnitts
- 205: Dritter Verfahrensschritt: Aufschieben einer Befestigungshülse
- 207: Vierter Verfahrensschritt: Verpressen der Befestigungshülse

## Patentansprüche

1. Fahrzeugfluidverbindungsanordnung (100) zum fluidtechnischen Verbinden von fluidführenden Bauteilen in einem Fahrzeug, umfassend:
einen Fahrzeugfluidstutzen (101) zum Leiten eines Fluids in einem Fahrzeug, wobei der Fahrzeugfluidstutzen (101) ausschließlich aus einem Thermoplast geformt ist, und einen Stutzenabschnitt (105) mit einem Tannenbaumprofil (107) aufweist,
einen Fluidschlauch (103) zum Leiten des Fluids in dem Fahrzeug, wobei der Fluidschlauch (103) aus einem Elastomer geformt ist, und einen Verbindungsabschnitt (137) aufweist, welcher auf den Stutzenabschnitt (105) des Fahrzeugfluidstutzens (101) aufgeschoben ist, und
eine Befestigungshülse (135), welche aus einem Metall geformt ist, und welche auf den Verbindungsabschnitt (137) des Fluidschlauchs (103) aufgeschoben und verpresst ist, wobei die auf den Verbindungsabschnitt (137) des Fluidschlauchs (103) aufgeschobene und verpresste Befestigungshülse (135) ausgebildet ist, den Verbindungsabschnitt (137) des Fluidschlauchs (103) kraftschlüssig an den Stutzenabschnitt (105) des Fahrzeugfluidstutzens (101) zu pressen, um eine druckstabile fluidtechnische Verbindung zwischen dem Fluidschlauch (103) und dem Fahrzeugfluidstutzen (101) zum Leiten des Fluids zu erreichen.

2. Fahrzeugfluidverbindungsanordnung (100) nach Anspruch 1, wobei das Tannenbaumprofil (107) des Stutzenabschnitts (105) durch eine Mehrzahl von den Stutzenabschnitt (105) umlaufenden Profilerhöhungen (109) gebildet ist, welche an der Innenseite (111) des aufgeschobenen Fluidschlauchs (103) anliegen, wobei sich an die jeweilige Profilerhöhung (109) des Tannenbaumprofils (107) jeweils eine den Stutzenabschnitt (105) umlaufende Profilvertiefung (113) anschließt.

3. Fahrzeugfluidverbindungsanordnung (100) nach Anspruch 2, wobei die Profilerhöhungen (109) jeweils dem aufgeschobenen Fluidschlauch (103) zugewandte Außenflächen (115) aufweisen, welche sich in Richtung eines Endes (117) des Fahrzeugfluidstutzens (101) verjüngen, um ein vorteilhaftes Aufschieben des Fluidschlauchs (103) auf den Stutzenabschnitt (105) zu ermöglichen.

4. Fahrzeugfluidverbindungsanordnung (100) nach Anspruch 2 oder 3, wobei die Profilerhöhungen (109) jeweils an einer dem Ende (117) des Fahrzeugfluidstutzens (101) abgewandten Seite eine Steilfläche (119) aufweisen, welche sich insbesondere winklig zu einer Längsachse (121) des Stutzenabschnitts (105) erstreckt, um ein Abziehen des aufgeschobenen Fluidschlauchs (103) zu erschweren.

5. Fahrzeugfluidverbindungsanordnung (100) nach einem der vorangehenden Ansprüche, wobei der Fahrzeugfluidstutzen (101) an einer dem Stutzenabschnitt (105) abgewandten Seite einen Verbindungsstutzen (125) aufweist, wobei der Verbindungsstutzen (125) in eine Öffnung (127) eines Fahrzeugbauteils (129) einführbar ist, um den Fahrzeugfluidstutzen (101) an dem Fahrzeugbauteil (129) zu befestigen, wobei der Verbindungsstutzen (125) insbesondere eine den Verbindungsstutzen (125) umlaufende Verbindungsstutzenvertiefung (131) aufweist, in welcher ein Dichtungselement (133) aufgenommen ist.

6. Fahrzeugfluidverbindungsanordnung (100) nach einem der vorangehenden Ansprüche, wobei der Fahrzeugfluidstutzen (101) einen den Fahrzeugfluidstutzen (101) umlaufenden Stutzenanschlag (141) aufweist, an welchem die Befestigungshülse (135) anliegt, wobei der Stutzenanschlag (141) insbesondere zwischen dem Stutzenabschnitt (105) und einem zentralen Bereich (123) des Fahrzeugfluidstutzens (101) angeordnet ist.

7. Fahrzeugfluidverbindungsanordnung (100) nach einem der vorangehenden Ansprüche, wobei die Befestigungshülse (135) eine Mehrzahl von die Befestigungshülse (135) umlaufenden Hülsenerhöhungen (143, 143-1, 143-2, 143-3) aufweist, wobei sich an die jeweilige Hülsenerhöhung (143, 143-1, 143-2, 143-3) der Befestigungshülse (135) jeweils eine die Befestigungshülse (135) umlaufende Hülsenvertiefung (145, 145-1, 145-2) anschließt, wobei insbesondere die Hülsenvertiefungen (145, 145-1, 145-2) als Abschnitte der Befestigungshülse (135) ausgebildet sind, welche gegenüber den Hülsenerhöhungen (143, 143-1, 143-2, 143-3) einen geringeren Innen- und Außendurchmesser der Befestigungshülse (135) bilden.

8. Fahrzeugfluidverbindungsanordnung (100) nach Anspruch 7, wobei die Hülsenerhöhungen (143, 143-1, 143-2, 143-3) eine erste Hülsenerhöhung (143-1), welche an einem ersten Hülsenende (147-1) der Befestigungshülse (135) angeordnet ist und an einem Stutzenanschlag (141) des Fahrzeugfluidstutzens (101) anliegt, und/oder eine zweite Hülsenerhöhung (143-2), welche an einem dem ersten Hülsenende (147-1) gegenüberliegenden zweiten Hülsenende (147-2) der Befestigungshülse (135) angeordnet ist, und/oder eine dritte Hülsenerhöhung (143-3), welche mittig in der Befestigungshülse (135) zwischen der ersten und zweiten Hülsenerhöhung (143-1, 143-2) angeordnet ist, umfassen.

9. Fahrzeugfluidverbindungsanordnung (100) nach Anspruch 8, wobei die Hülsenvertiefungen (145) eine erste Hülsenvertiefung (145-1), welche zwischen der ersten Hülsenerhöhung (143-1) und der dritten Hülsenerhöhung (143-3) angeordnet ist, und/oder eine zweite Hülsenvertiefung (145-2), welche zwischen der dritten Hülsenerhöhung (143-3) und der zweiten Hülsenerhöhung (143-2) angeordnet ist, umfassen.

10. Fahrzeugfluidverbindungsanordnung (100) nach einem der vorangehenden Ansprüche, wobei der Fahrzeugfluidstutzen (101) ausschließlich aus einem Hochleistungsthermoplast-Material, insbesondere ausschließlich aus Polyphenylensulfid (PPS), Polyphthalamid (PPA), teilaromatischen Polyamiden oder aliphatischen Polyamiden geformt ist.

11. Fahrzeugfluidverbindungsanordnung (100) nach einem der vorangehenden Ansprüche, wobei der Fahrzeugfluidstutzen (101) einen zentralen Bereich (123) aufweist, welcher sich entlang einer zentralen Längsachse (149) erstreckt, wobei der Stutzenabschnitt (105) insbesondere als ein gegenüber dem zentralen Bereich (123) abgewinkelter Stutzenabschnitt (105) ausgebildet ist, wobei sich der abgewinkelter Stutzenabschnitt (105) entlang einer Längsachse (121) erstreckt, welche sich gegenüber der zentralen Längsachse (149) des zentralen Bereichs (123) winklig erstreckt, oder wobei der Stutzenabschnitt (105) insbesondere als ein gegenüber dem zentralen Bereich (123) gerade erstreckender Stutzenabschnitt (105) ausgebildet ist, wobei sich der gerade erstreckende Stutzenabschnitt (105) entlang einer Längsachse (121) erstreckt, welche sich gegenüber der zentralen Längsachse (149) des zentralen Bereichs (123) parallel erstreckt.

12. Fahrzeugfluidverbindungsanordnung (100) nach einem der vorangehenden Ansprüche ferner umfassend:
einen weiteren Fahrzeugfluidstutzen (101-1) zum Leiten eines Fluids in dem Fahrzeug, welcher ausschließlich aus einem Thermoplast geformt ist, und einen weiteren Stutzenabschnitt (105) mit einem Tannenbaumprofil (107) aufweist,
einem weiteren Fluidschlauch (103-1) zum Leiten des Fluids in dem Fahrzeug, welcher aus einem Elastomer geformt ist, und einen weiteren Verbindungsabschnitt (137) aufweist, welcher auf den weiteren Stutzenabschnitt (105-1) des weiteren Fahrzeugfluidstutzens (101-1) aufgeschoben ist, und
eine weitere Befestigungshülse (135-1), welche aus einem Metall geformt ist, und welche auf den weiteren Verbindungsabschnitt (137-1) des weiteren Fluidschlauchs (103-1) aufgeschoben und verpresst ist, wobei die auf den weiteren Verbindungsabschnitt (137-1) des weiteren Fluidschlauchs (103-1) aufgeschobene und verpresste weitere Befestigungshülse (135-1) ausgebildet ist, den weiteren Verbindungsabschnitt (137-1) des weiteren Fluidschlauchs (103-1) kraftschlüssig mit dem weiteren Stutzenabschnitt (105-1) des weiteren Fahrzeugfluidstutzens (101-1) zu verbinden, um eine druckstabile fluidtechnische Verbindung zwischen dem weiteren Fluidschlauch (103-1) und dem weiteren Fahrzeugfluidstutzen (101-1) zu erreichen,
wobei die Fahrzeugfluidverbindungsanordnung (100) ferner ein Fixierelement (151) aufweist, welches mit dem Fahrzeugfluidstutzen (101) und dem weiteren Fahrzeugfluidstutzen (101-1) verbunden ist, um den Fahrzeugfluidstutzen (101) und den weiteren Fahrzeugfluidstutzen (101-1) aneinander zu fixieren, insbesondere stoffschlüssig, formschlüssig und/oder kraftschlüssig zu fixieren.

13. Fahrzeugfluidverbindungsanordnung (100) nach Anspruch 12, wobei das Fixierelement (151) einen ersten Fixierbereich (153), insbesondere zwei erste Fixierschenkel (159), aufweist, welcher ausgebildet ist, einen Befestigungsbereich (155) des Fahrzeugfluidstutzens (101) zu umgreifen, und wobei das Fixierelement (151) einen zweiten Fixierbereich (163), insbesondere zwei zweite Fixierschenkel (161), aufweist, welcher ausgebildet ist, einen weiteren Befestigungsbereich (155-1) des weiteren Fahrzeugfluidstutzens (101-1) zu umgreifen, um den Fahrzeugfluidstutzen (101) und den weiteren Fahrzeugfluidstutzen (101-1) aneinander zu fixieren.

14. Fahrzeugfluidverbindungsanordnung (100) nach Anspruch 12 oder 13, wobei der Befestigungsbereich (155) und der weitere Befestigungsbereich (155-1) jeweils endseitig durch Befestigungsrippen begrenzt sind, und wobei der erste und zweite Fixierbereich (153, 163) an den jeweiligen Befestigungsrippen anliegen, um eine rutschsichere Fixierung sicherzustellen.

15. Verfahren (200) zum Herstellen einer Fahrzeugfluidverbindungsanordnung (100), wobei das Verfahren (200) die folgenden Verfahrensschritte umfasst:
Bereitstellen (201) eines Fahrzeugfluidstutzens (101) zum Leiten eines Fluids in einem Fahrzeug, wobei der Fahrzeugfluidstutzen (101) ausschließlich aus einem Thermoplast geformt ist, und einen Stutzenabschnitt (105) mit einem Tannenbaumprofil (107) aufweist,
Aufschieben (203) eines Verbindungsabschnitts (137) eines aus einem Elastomer geformten Fluidschlauchs (103) zum Leiten des Fluids in dem Fahrzeug auf den Stutzenabschnitt (105) des Fahrzeugfluidstutzens (101),
Aufschieben (205) einer aus einem Metall geformten Befestigungshülse (135) auf den Verbindungsabschnitt (137) des Fluidschlauchs (103),
Verpressen (207) der auf den Verbindungsabschnitt (137) des Fluidschlauchs (103) aufgeschobenen Befestigungshülse (135), um den Verbindungsabschnitt (137) des Fluidschlauchs (103) kraftschlüssig an den Stutzenabschnitt (105) des Fahrzeugfluidstutzens (101) zu pressen, und um eine druckstabile fluidtechnische Verbindung zwischen dem Fluidschlauch (103) und dem Fahrzeugfluidstutzen (101) zu erreichen.
